# EUROPEAN PATENT SPECIFICATION

(11) **EP 3 392 386 B1**
(45) Date of publication and mention of the grant of the patent: **23.09.2020**
(21) Application number: 16875619.5
(22) Date of filing: 13.12.2016
(51) Int. Cl.: D04H 1/4209, D04H 1/46, F01N 3/28

(54) **HOLDING SEAL MATERIAL AND METHOD FOR PRODUCING HOLDING SEAL MATERIAL**
HALTEDICHTUNGSMATERIAL UND VERFAHREN ZUR HERSTELLUNG EINES HALTEDICHTUNGSMATERIALS
MATÉRIAU D'ÉTANCHÉITÉ DE FIXATION ET PROCÉDÉ DE PRODUCTION D'UN MATÉRIAU D'ÉTANCHÉITÉ DE FIXATION

(30) Priority: 16.12.2015 JP 2015245626
(43) Date of publication of application: 24.10.2018
(73) Proprietor: IBIDEN CO., LTD., Ogaki-shi, Gifu 503-8604 (JP)
(72) Inventor: OKABE, Takahiko, Takahama-shi Aichi 444-1301 (JP); HATANAKA, Kiyonari, Ogaki-shi Gifu 503-8559 (JP)
(74) Representative: Winter, Brandl, Fürniss, Hübner, Röss, Kaiser, Polte - Partnerschaft mbB
(86) International application number: PCT/JP2016/087003
(87) International publication number: WO 2017/104642

(56) References cited:
- WO-A1-02/095116
- WO-A1-2008/121801
- WO-A1-2014/115814
- JP-A- S5 893 841
- JP-A- H09 170 156
- JP-A- S61 239 069
- JP-A- 2002 506 166
- JP-A- 2006 307 376
- JP-A- 2009 085 093
- JP-A- 2013 213 463
- KYUZAN TAKAHASHI: "Ceramic fiber nonwoven fabrics", Kogyo Zairyo, vol. 37, no. 13, 1989, pages 68-73, XP009511052,

## Description

### TECHNICAL FIELD

The present invention relates to holding seal materials and methods for producing holding seal materials.

### BACKGROUND ART

Exhaust gas from the internal combustion engines of vehicles (e.g., automobiles) or construction machines contains harmful substances such as carbon monoxide (CO), hydrocarbon (HC), and nitrogen oxide (NOₓ). Catalytic converters (exhaust gas purification apparatus) that convert such harmful substances into harmless carbon dioxide (CO₂), water (H₂O), and nitrogen (N₂) have been developed and in actual use.

A typical catalytic converter (exhaust gas purification apparatus) includes an exhaust gas-treating body, a casing housing the exhaust gas-treating body, and a holding seal material made of inorganic fibers disposed in the gap between the exhaust gas-treating body and the casing.

Generally, the exhaust gas-treating body is made of a porous ceramic such as silicon carbide or cordierite and has a honeycomb shape. The exhaust gas-treating body supports a catalyst such as a noble metal (e.g., platinum, palladium, and rhodium), an alkali metal (e.g., potassium and sodium), an alkali earth metal (e.g., barium), or a metal oxide (e.g., cerium oxide).

The exhaust gas from the internal combustion engine flows through the exhaust gas-treating body in the exhaust gas purification apparatus. At this time, heat of the exhaust gas raises the temperature of the catalyst supported on the exhaust gas-treating body to its active temperature. The activated catalyst converts harmful substances in the exhaust gas into harmless substances.

For more efficient purification of exhaust gas, the exhaust gas purification apparatus has recently been disposed closer to the internal combustion engine, allowing higher-temperature exhaust gas to reach the exhaust gas purification apparatus so that the catalyst can reach its active temperature faster.

The exhaust gas purification apparatus typically includes a holding seal material disposed between the exhaust gas-treating body and the casing. The holding seal material serves to prevent damage caused by contact of the exhaust gas-treating body with the casing during traveling of the vehicle. It also serves to prevent leakage of exhaust gas from the gap between the casing and the exhaust gas-treating body. The holding seal material also functions to prevent the exhaust gas-treating body from falling off due to vibrations transmitted from the internal combustion engine, or due to the exhaust pressure of exhaust gas. The holding seal material also needs to have heat-insulating performance because the exhaust gas-treating body has to be maintained at high temperature to maintain reactivity. Materials satisfying these requirements include sheet materials made of inorganic fibers such as alumina fibers. However, the inorganic fibers constituting the holding seal material easily thermally degrade when high-temperature exhaust gas at above 950°C reaches the exhaust gas purification apparatus. As a result, the contact pressure of the holding seal material decreases, so that the holding force also easily decreases. Moreover, when the exhaust gas purification apparatus is disposed closer to the internal combustion engine, the holding seal material is exposed to a stronger exhaust gas flow, which accelerates erosion by exhaust gas. Thus, there is a need for a highly heat resistant holding seal material whose contact pressure is less likely to decrease and which is less susceptible to erosion, even when exposed to high-temperature exhaust gas.

Studies have been made to increase the heat resistance of the holding seal material. WO 2004/003276 discloses, as a material for a highly heat resistant holding seal material, an inorganic short fiber aggregate for a holding material. The inorganic short fiber aggregate has a specific surface area of 10 m²/g or lower. At least 99% (including 100%) of the number of the inorganic short fibers consists of inorganic short fibers having fiber diameters of from 1.5 to 15 µm, and the inorganic short fibers have a chemical composition of from 74 to 86 mass% of an alumina component and from 26 to 14 mass% of a silica component and a mineral composition of from 15 to 60 mass% of mullite, and have an average fiber diameter of from 2 to 8 µm.

JP 2001-259438 A discloses a holding seal material including an inorganic fiber mat that has been needle-punched at an areal density of 50 to 3000 marks per 100 cm². The holding seal material has an organic matter content of more than 0 wt% and not more than 2 wt%, and shows a contact pressure of 5 to 500 kPa when heated at a temperature between 300°C to 1000°C at a packing density of 0.15 to 0.45 g/cm³.

JP S61 239069A discloses a fiber blanket comprising alumina fibres having an alumina/silica weight ratio of 99:1 to 72:28, prepared by mixing 1L of an aqueous solution of aluminum oxychloride (the content of Al is 70g/L) with 35 g of a 20% silica sol, then spinning the mixture by a blowing method and then needle punching a sheet of the obtained fibres, before firing the sheet at 1265°C.

JP 2013 213463 A discloses a holding seal material having a alumina/silica weight ratio of 72:28, prepared by mixing basic aluminum chloride water solution, which is prepared such that Al content is 70 g/l and Al:Cl=1:1.8 (atomic ratio) is established, with Silica sol; spinning the mixture by a blowing method to obtain fibers; needle punching a sheet of the obtained fibers; and firing the sheet at 1250°C.

JP 2009 085093 A discloses a mat member having a alumina/silica weight ratio of 72:28, prepared by mixing basic aluminum chloride water solution, which is prepared such that Al content is 70 g/l and Al:Cl=1:1.8 (atomic ratio) is established, with Silica sol; spinning the mixture by a blowing method to obtain fibers; needle punching a sheet of the obtained fibers; and firing the sheet at 1250°C.

### SUMMARY OF INVENTION

### - Technical problem

Even if a holding seal material is produced using the inorganic short fiber aggregate of WO 2004/003276, the contact pressure easily decreases when the holding seal material is heated at 950°C or higher under high pressure. Such a holding material thus fails to maintain sufficient holding force.

The holding seal material of JP 2001-259438 A has heat resistance when exposed to high heat for a short time. However, the holding seal material is hardly sufficient in heat resistance when exposed to high heat for a long time, and fails to maintain a sufficient contact pressure. The reason for this is presumably that the alumina fibers constituting the holding seal material contain 70 wt% of an alumina component and thus have insufficient heat resistance.

The present invention was made in view of the above situation and aims to provide a holding seal material whose contact pressure is less likely to decrease and which is less susceptible to erosion, even when exposed to high-temperature exhaust gas at 950°C or higher for a long time under high pressure.

### - Solution to problem

The method for producing a holding seal material of the present invention is a method for producing a holding seal material including alumina fibers, the method including: a spinning mixture preparing step of mixing an aqueous solution of basic aluminum chloride and silica sol to achieve a proportion of basic aluminum chloride of 82.8 to 97.7 wt% and a proportion of silica of 17.2 to 2.3 wt% to prepare a spinning mixture; an alumina fiber precursor producing step of spinning the spinning mixture into alumina fiber precursors by a blowing method at 80°C to 140°C; an aggregate producing step of collecting the alumina fiber precursors to produce an alumina fiber precursor aggregate having a moisture content of 5 to 10%; a conveying step of moisturizing the alumina fiber precursor aggregate to a moisture content of 10 to 18% and conveying the alumina fiber precursor aggregate; a sheet producing step of compressing the alumina fiber precursor aggregate into a sheet having a moisture content of 10 to 18%; a needle punching step of needle punching the sheet under the condition of 2 to 50 marks/cm²; and a firing step of firing the sheet having a moisture content of 10 to 18% at 1200°C to 1300°C.

First, in the spinning mixture preparing step, an aqueous solution of basic aluminum chloride and silica sol are mixed to achieve a proportion of basic aluminum chloride of 82.8 to 97.7 wt% and a proportion of silica of 17.2 to 2.3 wt%.

As long as the above weight proportions of basic aluminum chloride and silica can be achieved, these compounds may be mixed by any method.

The above weight proportions of basic aluminum chloride and silica allow the alumina fibers constituting the resulting holding seal material to contain 85 to 98 wt% of an alumina component and 15 to 2 wt% of a silica component.

The aqueous solution of basic aluminum chloride means an aqueous solution prepared to contain aluminum and chlorine at an Al/Cl ratio of 1.5 to 2.5 (atomic ratio).

Next, in the alumina fiber precursor producing step, the spinning mixture is spun into alumina fiber precursors by a blowing method at 80°C to 140°C.

The spinning of the spinning mixture (fiberization of the spinning solution) into the alumina fiber precursors is performed by a blowing method involving feeding the spinning solution to a high-velocity spinning air stream. The temperature of the spinning atmosphere at this time is 80°C to 140°C, preferably 85°C to 140°C, more preferably 100°C to 120°C.

A temperature of the spinning atmosphere of lower than 80°C results in insufficient evaporation of the moisture contained in the alumina fiber precursors, so that moisture that vaporizes in the firing step tends to cause defects inside the alumina fibers.

A temperature of the spinning atmosphere of higher than 140°C results in insufficient stretching of the alumina fiber precursors.

Subsequently, in the aggregate producing step, the alumina fiber precursors are collected to produce an alumina fiber precursor aggregate having moisture content of 5 to 10%.

Specifically, in this step, a certain amount of the fiberized alumina fiber precursors are collected on a fiber collecting apparatus to produce an alumina fiber precursor aggregate. The fiber collecting apparatus has a structure that suctions the spinning air stream from the bottom, so that the air stream controlled at 80°C to 140°C passes through the inside of the aggregate of the collected alumina fiber precursors to promote drying of the alumina fiber precursors. The moisture content of the alumina fiber precursor aggregate at this time is controlled to 5 to 10%. As a result, the alumina fiber precursors are dried throughout.

If the moisture content is less than 5%, the alumina fiber precursor aggregate is dried too much, and the alumina fiber precursors may crack in conveying the alumina fiber precursor aggregate.

If the moisture content is more than 10%, the alumina fiber precursors are not dried throughout.

Subsequently, in the conveying step, the alumina fiber precursor aggregate is moisturized to a moisture content of 10 to 18% and conveyed.

In the aggregate producing step, the alumina fiber precursors are dried throughout; however, in conveying the alumina fiber precursor aggregate, the presence of moisture attached to the surface of the alumina fiber precursors can increase the lubricity between the alumina fiber precursors, thereby avoiding damage due to vibrations during conveying. In this step, the alumina fiber precursor aggregate is thus moisturized to a moisture content of 10 to 18% for conveying. The resulting alumina fiber precursors are wet on the surface but dry on the inside.

If the moisture content is less than 10%, the alumina fiber precursor aggregate is dried too much, and the alumina fiber precursors may crack in the subsequent sheet producing step.

If the moisture content is more than 18%, defects easily occur inside the alumina fibers in the subsequent firing step.

In this step, the alumina fiber precursor aggregate may be moisturized by any method as long as the moisture content of the alumina fiber precursor aggregate reaches 10 to 18%. For example, the aggregate may be moisturized by applying a moisturizing air stream, or by spraying.

Subsequently, in the sheet producing step, the alumina fiber precursor aggregate is compressed into a sheet having a moisture content of 10 to 18%.

The moisture content of the sheet of 10 to 18% enables production of alumina fibers having high heat resistance and high strength in the subsequent firing step.

If the moisture content is less than 10%, the sheet is dried too much, and the alumina fiber precursors may crack in an early stage of firing in the subsequent firing step.

If the moisture content is more than 18%, defects easily occur inside the alumina fibers in the subsequent firing step.

Subsequently, in the needle punching step, the sheet is needle-punched under the condition of 2 to 50 marks/cm².

Needle punching entangles the alumina fibers with each other, improving the strength of the resulting holding seal material. Needle punching thus suppresses the breakage of the holding seal material and improves the holding force when the holding seal material is assembled with the exhaust gas treating apparatus.

Additionally, air streams tend to flow through the marks formed by needle punching, so that the moisture in the sheet is less likely to be unevenly distributed.

In the firing step, the sheet having a moisture content of 10 to 18% is fired at 1200°C to 1300°C.

This step converts the alumina fiber precursors into alumina fibers. The holding seal material can be produced by cutting the sheet into a predetermined size.

A firing temperature of lower than 1200°C results in insufficient crystallization, which tends to weaken the fiber strength.

A firing temperature of higher than 1300°C causes excessive grain growth in the fiber crystals, resulting in too hard, brittle fibers.

The holding seal material of the present invention is a holding seal material produced by the above-described method, including: alumina fibers, wherein the alumina fibers contain 85 to 98 wt% of an alumina component and 15 to 2 wt% of a silica component, the holding seal material has multiple marks formed by needle punching, and in a heat treatment test, a contact pressure of the holding seal material heated at a test temperature of 950°C is 65 to 99% of a contact pressure of the holding seal material heated at a test temperature of 800°C, wherein the heat treatment test includes: a compressing step of disposing the holding seal material between an upper plate and a lower plate and compressing the holding seal material to a gap bulk density (GBD) of 0.3 g/cm³; a heating step of heating, after the compressing step, the compressed holding seal material to a predetermined test temperature at a temperature-increasing rate of 45°C/min and maintaining the holding seal material at the test temperature for six hours; a releasing step of cooling, after the heating step, the holding seal material to room temperature and releasing the holding seal material to a gap bulk density (GBD) of 0.27 g/cm³; and a cycling step of repeating, after the releasing step, 1000 times the cycle of re-compression of the holding seal material to a gap bulk density (GBD) of 0.3 g/cm³ and re-release of the holding seal material to a gap bulk density (GBD) of 0.27 g/cm³ so as to calculate the contact pressure (kPa) of the holding seal material by dividing the load at the last re-release in the cycling step by the area of the holding seal material.

In the holding seal material of the present invention, the alumina fibers constituting the holding seal material of the present invention contain 85 to 98 wt% of an alumina component and 15 to 2 wt% of a silica component.

The alumina fibers containing such a large amount of an alumina component have improved heat resistance. The alumina fibers are thus less likely to degrade even when heated at high temperature, so that the contact pressure of the holding seal material is less likely to decrease even when the holding seal material is heated at high temperature.

Alumina fibers containing less than 85 wt% of an alumina component have insufficient heat resistance. Such alumina fibers easily degrade and cause a decrease in contact pressure when exposed to a high temperature of 950°C or higher for a long time under high pressure.

In alumina fibers containing more than 98 wt% of an alumina component, the heat resistance is close to its upper limit and difficult to improve. Additionally, since the amount of the silica component is small, the fiber elasticity is low. When a holding seal material containing such alumina fibers is repeatedly compressed and decompressed, the contact pressure decreases.

The holding seal material of the present invention has multiple marks formed by needle punching.

The "mark formed by needle punching" herein means a mark formed by needle punching the holding seal material to entangle the alumina fibers with each other.

Specifically, the needle punching is a treatment involving passing barbed needles through the holding seal material and then withdrawing the needles therefrom. In this treatment, the alumina fibers are caught by the barbs and pulled in the withdrawing direction of the needles. The alumina fibers are thereby entangled with each other.

In other words, the mark formed by needle punching means a pore formed by passing the needle through the holding seal material, and alumina fibers pulled into the pore.

Entangling the alumina fibers with each other can improve the strength of the holding seal material of the present invention. It can also prevent development of erosion due to exhaust gas.

In the holding seal material of the present invention, in a heat treatment test, a contact pressure of the holding seal material heated at a test temperature of 950°C is 65 to 99%, preferably 80 to 99% of a contact pressure of the holding seal material heated at a test temperature of 800°C.

The heat treatment test includes: a compressing step of disposing the holding seal material between an upper plate and a lower plate and compressing the holding seal material to a gap bulk density (GBD) of 0.3 g/cm³; a heating step of heating, after the compressing step, the compressed holding seal material to a predetermined test temperature at a temperature-increasing rate of 45°C/min and maintaining the holding seal material at the test temperature for six hours; a releasing step of cooling, after the heating step, the holding seal material to room temperature and releasing the holding seal material to a gap bulk density (GBD) of 0.27 g/cm³; and a cycling step of repeating, after the releasing step, 1000 times the cycle of re-compression of the holding seal material to a gap bulk density (GBD) of 0.3 g/cm³ and re-release of the holding seal material to a gap bulk density (GBD) of 0.27 g/cm³ so as to calculate the contact pressure (kPa) of the holding seal material by dividing the load at the last re-release in the cycling step by the area of the holding seal material.

The holding seal material of the present invention is typically used in an exhaust gas purification apparatus.

Specifically, the holding seal material of the present invention is wound around an exhaust gas-treating body. The exhaust gas-treating body with the holding seal material of the present invention therearound is housed in a casing to give an exhaust gas purification apparatus.

In such an exhaust gas purification apparatus, the holding seal material of the present invention is subjected to high pressure.

Additionally, the exhaust gas purification apparatus including the holding seal material of the present invention is mounted in a vehicle, and the holding seal material of the present invention is exposed to high-temperature exhaust gas when the internal combustion engine is in operation.

The contact pressure of the holding seal material of the present invention is less likely to decrease even when the holding seal material is heat-treated for a long time under conditions of high temperature and high pressure as in the above heat treatment test.

The holding seal material of the present invention thus sufficiently maintains the contact pressure even when exposed to high-temperature exhaust gas under high pressure.

As a result, the holding seal material of the present invention can sufficiently hold the exhaust gas-treating body in the exhaust gas purification apparatus including the holding seal material of the present invention.

In the heat treatment test, if the contact pressure of the holding seal material heated at a test temperature of 950°C is less than 65% of the contact pressure of the holding seal material heated at a test temperature of 800°C, the contact pressure of the holding seal material is too low. When such a holding seal material is used in an exhaust gas purification apparatus, the exhaust gas-treating body easily falls off. In addition, the fixing force at the fiber intersections in the holding seal material decreases, accelerating erosion due to exhaust gas.

It is difficult to produce a holding seal material which, when heated at a test temperature of 950°C in the heat treatment test, has a contact pressure of more than 99% of the contact pressure of the holding seal material heated at a test temperature of 800°C in the heat treatment test.

In the holding seal material of the present invention, in the heat treatment test, the contact pressure of the holding seal material heated at a test temperature of 950°C is preferably 10 to 50 kPa.

When the contact pressure of the holding seal material at a gap bulk density (GBD) of 0.27 g/cm³ is 10 to 50 kPa, the holding seal material can sufficiently hold the exhaust gas-treating body in the exhaust gas purification apparatus including the holding seal material.

Thus, in the heat treatment test, when the contact pressure of the holding seal material heated at a test temperature of 950°C is 10 to 50 kPa, the holding seal material of the present invention can sufficiently hold the exhaust gas-treating body in the exhaust gas purification apparatus including the holding seal material of the present invention.

In the holding seal material of the present invention, the alumina fibers preferably have an average fiber diameter of 5 to 8 µm.

If the alumina fibers have an average fiber diameter of smaller than 5 µm, the alumina fibers are too thin and less likely to have sufficient strength. A holding seal material containing such alumina fibers tends to have an insufficient contact pressure. Additionally, such alumina fibers easily scatter.

If the alumina fibers have an average fiber diameter of greater than 8 µm, the alumina fibers tend to contain many defective portions inside. Such alumina fibers have low fiber strength and easily break. Thus, when the holding seal material is subjected to high pressure, the contact pressure easily decreases due to breakage of alumina fibers.

In the holding seal material of the present invention, inorganic particles are preferably attached to the surface of the alumina fibers.

The inorganic particles attached to the surface of the alumina fibers form unevenness on the surface of the alumina fibers. The unevenness facilitates the contact between alumina fibers, improving friction between the alumina fibers. As a result, the contact pressure of the holding seal material of the present invention is improved.

In the holding seal material of the present invention, the inorganic particles are preferably at least one selected from the group consisting of titania particles, silica particles, alumina particles, and magnesia particles.

When any of these inorganic particles are attached to the surface of the alumina fibers, the contact pressure of the holding seal material of the present invention is improved.

In the holding seal material of the present invention, the alumina fibers preferably contain α-alumina in a proportion of 0.3 to 15 wt% relative to the weight of the alumina fibers.

When the alumina fibers contain α-alumina in a proportion of 0.3 to 15 wt% relative to the weight of the alumina fibers, the α-alumina crystallinity is appropriate, so that the alumina fibers have sufficiently high strength. Thus, the contact pressure of the holding seal material of the present invention is improved.

Alumina fibers containing α-alumina in a proportion of less than 0.3 wt% relative to the weight of the alumina fibers are less likely to have high strength.

Alumina fibers containing α-alumina in a proportion of more than 15 wt% relative to the weight of the alumina fibers easily lose elasticity. This makes it difficult to improve the contact pressure of the holding seal material with such alumina fibers.

The holding seal material of the present invention preferably contains at least one organic binder selected from the group consisting of a water-soluble or water-dispersed organic polymer, a thermoplastic resin, and a thermosetting resin.

The presence of any of these organic binders in the holding seal material makes it possible to more strongly entangle the alumina fibers with each other, and also to reduce the bulkiness of the holding seal material.

In the holding seal material of the present invention, the water-soluble or water-dispersed organic polymer is preferably at least one selected from the group consisting of acrylic resin, acrylate latex, rubber latex, carboxymethylcellulose, and polyvinyl alcohol.

In the holding seal material of the present invention, the thermoplastic resin is preferably styrene resin.

In the holding seal material of the present invention, the thermosetting resin is preferably epoxy resin.

The holding seal material of the present invention preferably has an organic binder content of 0.1 to 9.0 wt% relative to the weight of the holding seal material.

If the organic binder content is less than 0.1 wt% relative to the weight of the holding seal material, the weight of the organic binder is low, so that the alumina fibers are less likely to be strongly entangled and the bulkiness of the holding seal material is less likely to be reduced.

If the organic binder content is more than 9.0 wt% relative to the weight of the holding seal material, a large amount of organic binder decomposes into a large amount of organic gas when high-temperature exhaust gas reaches the exhaust gas purification apparatus including the holding seal material. Preferably, no such organic gas is generated.

In the holding seal material of the present invention, at least one of the marks formed by needle punching is preferably curved and penetrates the holding seal material.

When the mark(s) formed by needle punching are curved, the degree of alumina fiber entanglement is increased compared with when the mark(s) formed by needle punching are linear. This increases the strength of the holding seal material and improves the holding force.

In the holding seal material of the present invention, it may be difficult to entangle the alumina fibers with each other because the alumina fibers tend to have insufficient flexibility due to their high alumina ratio. The curved mark(s) formed by needle punching, however, makes it easy to sufficiently entangle the alumina fibers having a high alumina ratio, thus improving the strength of the holding seal material.

### BRIEF DESCRIPTION OF DRAWINGS

Fig. 1(a) is a schematic view illustrating one example of a cross section of an exhaust gas purification apparatus including the holding seal material of the present invention, taken along the direction parallel to the longitudinal direction. Fig. 1(b) is a cross-sectional view taken along line A-A in Fig. 1(a).
Fig. 2(a) is a schematic perspective view illustrating one example of the holding seal material of the present invention. Fig. 2(b) is a cross-sectional view taken along line B-B in Fig. 2(a).
Figs. 3(a) to 3(d) are schematic views sequentially illustrating examples of respective steps of a heat treatment test.
Fig. 4 is a schematic view illustrating one example of a method for producing an exhaust gas purification apparatus using the holding seal material of the present invention.

### DESCRIPTION OF EMBODIMENTS

Before describing the holding seal material of the present invention in detail, the following describes the exhaust gas purification apparatus in which the holding seal material of the present invention is to be used.

The exhaust gas purification apparatus includes a casing, an exhaust gas-treating body housed in the casing, and a holding seal material disposed between the exhaust gas-treating body and the casing.

The exhaust gas-treating body has a pillar shape in which a large number of through-holes are arranged in parallel in a longitudinal direction with a partition wall between each through-hole. An exhaust pipe for introducing exhaust gas discharged from an internal combustion engine is connected to one end of the casing and an exhaust pipe for discharging the exhaust gas that has passed through the exhaust gas purification apparatus to the outside is connected to the other end of the casing.

One example of the exhaust gas-treating body constituting the exhaust gas purification apparatus is described below.

The exhaust gas-treating body may have a honeycomb shape in which a large number of through-holes are arranged in parallel in a longitudinal direction with a partition wall between each through-hole.

The exhaust gas-treating body may be formed from non-oxide porous ceramic such as silicon carbide or silicon nitride, or from oxide porous ceramic such as sialon, alumina, cordierite, or mullite. Preferred among them is silicon carbide from the viewpoint of heat resistance and durability.

The exhaust gas-treating body may be monolithic, or may be an aggregated exhaust gas-treating body having multiple units bonded together with an adhesive layer.

The exhaust gas-treating body may have any shape, such as a cylindrical shape, a cylindroid shape, or a rectangular pillar shape.

Typically, the exhaust gas-treating body supports a catalyst to purify exhaust gas. Examples of the catalyst to be supported include noble metals (e.g., platinum, palladium, and rhodium), alkali metals (e.g., potassium and sodium), alkaline-earth metals (e.g., barium), and metal oxides (e.g., cerium oxide). These catalysts may be used alone or in combination of two or more thereof.

When exhaust gas discharged from the internal combustion engine reaches the exhaust gas-treating body inside the exhaust gas purification apparatus, the exhaust gas flows into the through-holes that are open at an exhaust gas inlet-side end face of the exhaust gas-treating body, and then passes through the through-holes while contacting the catalyst supported by the through-holes. At this point, harmful components such as CO, HC, and NOx in the exhaust gas are purified by the supported catalyst. The exhaust gas then flows out of the through-holes that are open at an exhaust gas outlet-side end face of the exhaust gas-treating body.

One example of the casing constituting the exhaust gas purification apparatus is described below.

The casing preferably has a cylindrical shape whose inner diameter is smaller than the diameter of a wound body produced by winding the holding seal material around the exhaust gas-treating body. The casing with such a shape can reliably hold the wound body when the wound body is housed in the casing.

The casing may have a cylindrical shape whose inner diameter of each end is smaller than the inner diameter of the middle portion, or may have a cylindrical shape whose inner diameter is constant.

The casing is preferably made of, but not limited to, a heat resistant metal such as stainless steel.

The holding seal material constituting the exhaust gas purification apparatus is the holding seal material of the present invention (described later).

The holding seal material constituting the exhaust gas purification apparatus is typically disposed in a compressed state between the exhaust gas-treating body and the casing. In such a compressed holding seal material, a contact pressure is generated. This contact pressure allows the holding seal material to hold the exhaust gas-treating body.

Next, one example in which exhaust gas passes through the exhaust gas purification apparatus is described below.

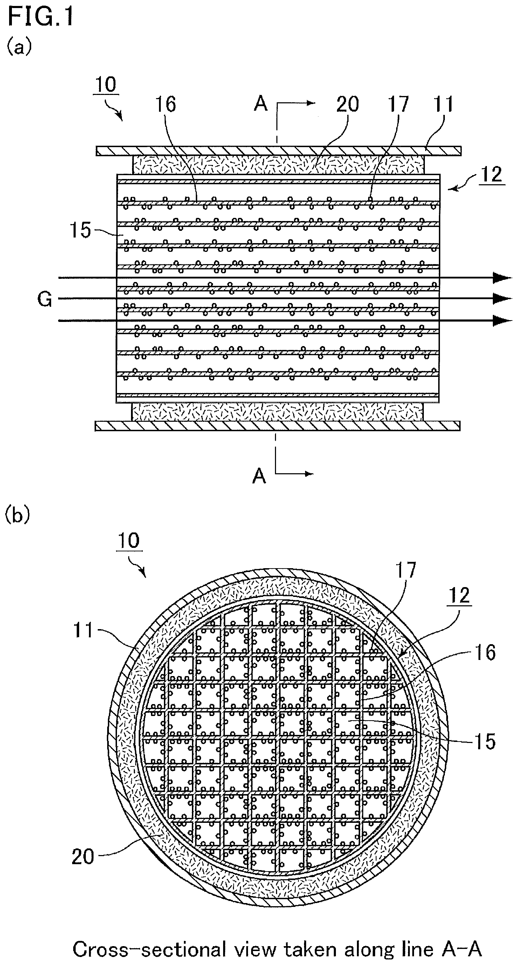

Fig. 1(a) is a schematic view illustrating one example of a cross section of an exhaust gas purification apparatus including the holding seal material of the present invention, taken along the direction parallel to the longitudinal direction. Fig. 1(b) is a cross-sectional view taken along line A-A in Fig. 1(a). As illustrated in Figs. 1(a) and 1(b), an exhaust gas purification apparatus 10 includes a casing 11, an exhaust gas-treating body 12 housed in the casing 11, and a holding seal material 20 disposed between the exhaust gas-treating body 12 and the casing 11.

The exhaust gas-treating body 12 has a cylindrical shape in which a large number of through-holes 15 are arranged in parallel in a longitudinal direction with a partition wall 16 between each through-hole 15. The partition wall 16 supports a catalyst 17.

When exhaust gas (in Fig. 1(a), the exhaust gas is indicated by G, and the flow of exhaust gas is indicated by arrows) discharged from the internal combustion engine reaches the exhaust gas-treating body 12 inside the exhaust gas purification apparatus 10, the exhaust gas flows into the through-holes 15 that are open at an exhaust gas inlet-side end face of the exhaust gas-treating body 12, and then passes through the through-holes 15 while contacting the catalyst 17 supported by the through-holes 15. At this point, harmful components such as CO, HC, and NOx in the exhaust gas are purified by the supported catalyst 17. The exhaust then flows out of the through-holes 15 that are open at an exhaust gas outlet-side end face of the exhaust gas-treating body 12.

As an example of the exhaust gas-treating body constituting the exhaust gas purification apparatus, the above describes an exhaust gas-treating body having through-holes and supporting a catalyst to function as a catalyst carrier. However, the exhaust gas-treating body included in the exhaust gas purification apparatus may be one that functions as an exhaust gas filter (honeycomb filter) in which each through-hole is plugged with a sealing material at either one end face.

The use of the honeycomb filter enables capturing particulate such as soot contained in exhaust gas.

Next, one example of the holding seal material of the present invention is described.

The holding seal material of the present invention is a holding seal material including: alumina fibers, wherein the alumina fibers contain 85 to 98 wt% of an alumina component and 15 to 2 wt% of a silica component, the holding seal material has multiple marks formed by needle punching, and in a heat treatment test, a contact pressure of the holding seal material heated at a test temperature of 950°C is 65 to 99% of a contact pressure of the holding seal material heated at a test temperature of 800°C, wherein the heat treatment test includes: a compressing step of disposing the holding seal material between an upper plate and a lower plate and compressing the holding seal material to a gap bulk density (GBD) of 0.3 g/cm³; a heating step of heating, after the compressing step, the compressed holding seal material to a predetermined test temperature at a temperature-increasing rate of 45°C/min and maintaining the holding seal material at the test temperature for six hours; a releasing step of cooling, after the heating step, the holding seal material to room temperature and releasing the holding seal material to a gap bulk density (GBD) of 0.27 g/cm³; and a cycling step of repeating, after the releasing step, 1000 times the cycle of re-compression of the holding seal material to a gap bulk density (GBD) of 0.3 g/cm³ and re-release of the holding seal material to a gap bulk density (GBD) of 0.27 g/cm³ so as to calculate the contact pressure (kPa) of the holding seal material by dividing the load at the last re-release in the cycling step by the area of the holding seal material.

The holding seal material of the present invention includes alumina fibers. The alumina fibers contain 85 to 98 wt% of an alumina component and 15 to 2 wt% of a silica component. The alumina fibers preferably contain 90 to 97 wt%, more preferably 92 to 97 wt% of an alumina component.

The alumina fibers containing such a large amount of an alumina component have improved heat resistance.

The alumina fibers are thus less likely to degrade even when heated at high temperature, so that the contact pressure of the holding seal material is less likely to decrease even when the holding seal material is heated at high temperature.

Alumina fibers containing less than 85 wt% of an alumina component have insufficient heat resistance. Such alumina fibers easily degrade and cause a decrease in contact pressure when exposed to a high temperature of 950°C or higher under high pressure for a long time.

In alumina fibers containing more than 98 wt% of an alumina component, the heat resistance is close to its upper limit and difficult to improve. Additionally, since the amount of the silica component is small, the fiber elasticity is low. When a holding seal material containing such alumina fibers is repeatedly compressed and decompressed, the contact pressure decreases.

In the holding seal material of the present invention, the alumina fibers preferably contain α-alumina in a proportion of 0.3 to 15 wt%, more preferably 0.5 to 13 wt% relative to the weight of the alumina fibers.

When the alumina fibers contain α-alumina in a proportion of 0.3 to 15 wt% relative to the weight of the alumina fibers, the α-alumina crystallinity is appropriate, so that the alumina fibers have sufficiently high strength. Thus, the contact pressure of the holding seal material of the present invention is improved.

Alumina fibers containing α-alumina in a proportion of less than 0.3 wt% relative to the weight of the alumina fibers are less likely to have high strength.

Alumina fibers containing α-alumina in a proportion of more than 15 wt% relative to the weight of the alumina fibers easily lose elasticity. This makes it difficult to improve the contact pressure of the holding seal material with such alumina fibers.

In the holding seal material of the present invention, the alumina fibers preferably have an average fiber diameter of 5 to 8 µm.

If the alumina fibers have an average fiber diameter of smaller than 5 µm, the alumina fibers are too thin and less likely to have sufficient strength. A holding seal material containing such alumina fibers tends to have an insufficient contact pressure. Additionally, such alumina fibers easily scatter.

If the alumina fibers have an average fiber diameter of greater than 8 µm, the alumina fibers tend to contain many defective portions inside. Such alumina fibers have low fiber strength and easily break. Thus, when the holding seal material is subjected to high pressure, the contact pressure easily decreases due to breakage of alumina fibers.

In the holding seal material of the present invention, the alumina fibers preferably have an average fiber length of 0.1 to 150 mm, more preferably 0.5 to 100 mm.

If the average fiber length of the alumina fibers is shorter than 0.1 mm, the alumina fibers are less likely to be entangled with each other. The holding seal material of the present invention thus tends to have an insufficient contact pressure.

If the average fiber length of the alumina fibers is longer than 150 mm, it may be difficult to uniformly disperse the alumina fibers. Thus, when the holding seal material is subjected to high pressure, fiber breakage will occur in the portions where the alumina fibers are concentrated, so that the contact pressure easily decreases.

In the holding seal material of the present invention, inorganic particles are preferably attached to the surface of the alumina fibers.

The inorganic particles attached to the surface of the alumina fibers form unevenness on the surface of the alumina fibers. The unevenness facilitates the contact between the alumina fibers, improving friction between the alumina fibers. As a result, the contact pressure of the holding seal material of the present invention is improved.

Examples of such inorganic particles include metal oxide particles such as titania particles, silica particles, alumina particles, and magnesia particles. Preferred among them are titania particles and alumina particles. Inorganic particles of one kind may be used alone, or inorganic particles of two or more kinds may be used in combination.

When any of these inorganic particles are attached to the surface of the alumina fibers, the contact pressure of the holding seal material of the present invention is improved.

The holding seal material of the present invention has multiple marks formed by needle punching.

Entangling the alumina fibers with each other by needle punching can improve the strength of the holding seal material of the present invention. It can also prevent the development of erosion due to exhaust gas.

Additionally, needle punching of the holding sealing can result in the use of less organic binder in molding of the holding seal material.

When the holding seal material contains a large amount of organic binder, the organic binder is likely to decompose into organic gas when high-temperature exhaust gas reaches the exhaust gas purification apparatus including the holding seal material. Preferably, no such organic gas is generated.

In other words, needle punching reduces the amount of organic gas.

The areal density of the marks formed by needle punching is not limited, but preferably 2 to 50 marks/cm².

In the holding seal material of the present invention, at least one of the marks formed by needle punching is preferably curved and penetrates the holding seal material.

When the mark(s) formed by needle punching are curved, the degree of alumina fiber entanglement is increased compared with when the mark(s) formed by needle punching are linear. This increases the strength of the holding seal material and improves the holding force.

In the holding seal material of the present invention, it may be difficult to entangle the alumina fibers with each other because the alumina fibers tend to have insufficient flexibility due to their high alumina ratio. The curved mark(s) formed by needle punching, however, make it easy to sufficiently entangle the alumina fibers having a high alumina ratio, thus improving the strength of the holding seal material.

The mark(s) formed by needle punching may be curved in an arch shape.

In the holding seal material of the present invention, all the marks formed by needle punching may be curved. The direction of the curve is not limited.

Curving all the marks formed by needle punching enables formation of many marks by needle punching in the holding seal material, which can further increase the degree of alumina fiber entanglement.

The marks formed by needle punching are preferably formed obliquely to the thickness direction of the holding seal material.

When the marks formed by needle punching are formed obliquely to the thickness direction of the holding seal material, the marks formed by needle punching can be long, so that the degree of alumina fiber entanglement can be increased.

The shape of the holding seal material with such a structure is described below.

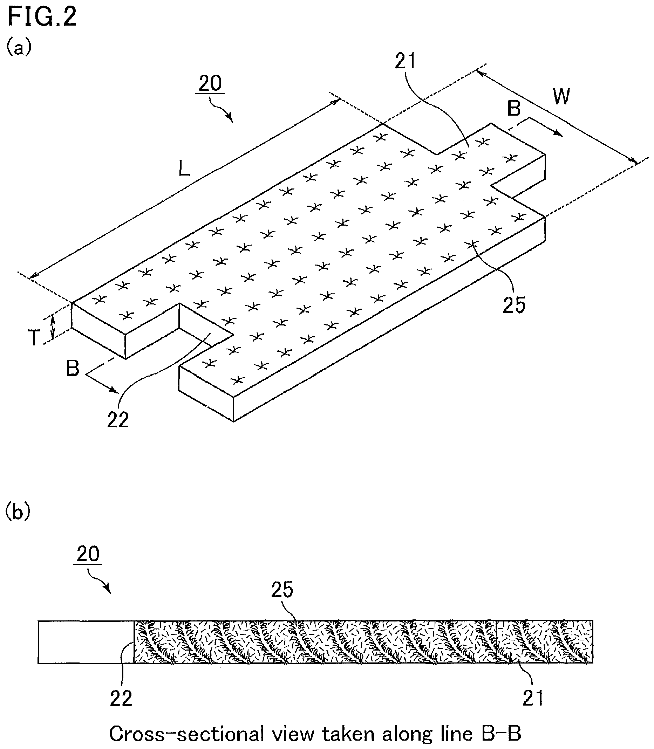

Fig. 2(a) is a schematic perspective view illustrating one example of the holding seal material of the present invention. Fig. 2(b) is a cross-sectional view taken along line B-B in Fig. 2(a).

As illustrated in Fig. 2(a), the holding seal material 20, which is one example of the holding seal material of the present invention, is rectangular in a plan view, and has a flat-shape with predetermined length (indicated by arrow L in Fig. 2(a)), width (indicated by arrow W in Fig. 2(a)), and thickness (indicated by arrow T in Fig. 2(a)).

The holding seal material 20 has multiple marks formed by needle punching 25 formed in a main surface.

The holding seal material 20 illustrated in Fig. 2(a) includes a projecting portion 21 on one end and a recessed portion 22 on the other end in the longitudinal direction. The projecting portion 21 and the recessed portion 22 of the holding seal material 20 are formed to fit each other when the holding seal material 20 is wound around an exhaust gas-treating body to assemble an exhaust gas purification apparatus as described above.

As illustrated in Fig. 2(b), each mark formed by needle punching 25 is curved and formed obliquely to the thickness direction of the holding seal material 20.

The basis weight (weight per unit area) of the holding seal material of the present invention is not particularly limited, but it is preferably 900 to 3000 g/m².

If the basis weight of the holding seal material is less than 900 g/m², the holding seal material is less likely to have a sufficiently high holding force as a holding material to fill a predetermined gap between the exhaust gas-treating body and the casing.

If the basis weight of the holding seal material is more than 3000 g/m², it will be difficult to reduce the bulk of the holding seal material, and the holding seal material will be thick. Thus, in the exhaust gas purification apparatus including the holding seal material, it may be difficult to put the holding seal material in a predetermined gap between the exhaust gas-treating body and the metal casing by, for example, a press-fitting method.

The bulk density of the holding seal material of the present invention (bulk density of the holding seal material before used in an exhaust gas purifying apparatus) is also not particularly limited, but it is preferably 0.1 to 0.23 g/cm³. If the bulk density of the holding seal material is less than 0.1 g/cm³, it will be difficult to maintain the shape of the holding seal material in a predetermined shape because the alumina fibers are loosely entangled and thus easily separated.

A holding seal material having a bulk density of more than 0.23 g/cm³ is rigid so that it is poorly wound around the exhaust gas-treating body and susceptible to cracking.

The thickness of the holding seal material of the present invention is not particularly limited, but it is preferably 4 to 25 mm.

If the thickness of the holding seal material is less than 4 mm, the holding seal material is less likely to have sufficient holding force as a holding seal material to fill a predetermined gap between the exhaust gas-treating body and the metal casing. The holding seal material thus easily falls off the casing when used in the exhaust gas purification apparatus.

A holding seal material having a thickness of more than 25 mm is too thick, so that it is poorly wound around the exhaust gas-treating body and susceptible to cracking.

The holding seal material of the present invention may further contain an organic binder.

Any organic binder may be used. Example thereof include water-soluble or water-dispersed organic polymers such as acrylic resin, acrylate latex, rubber latex, carboxymethylcellulose, and polyvinyl alcohol, thermoplastic resins such as styrene resin, and thermosetting resins such as epoxy resin.

The presence of any of these organic binders in the holding seal material makes it possible to more strongly entangle the alumina fibers and also to reduce the bulkiness of the holding seal material.

In the holding seal material of the present invention, the organic binder content relative to the weight of the holding seal material is preferably 0.1 to 9.0 wt%, more preferably 0.2 to 2.0 wt%.

If the organic binder content is less than 0.1 wt% relative to the weight of the holding seal material, the weight of the organic binder is low, so that the alumina fibers are less likely to be strongly entangled, and the bulkiness of the holding seal material is less likely to be reduced.

If the organic binder content is more than 9.0 wt% relative to the weight of the holding seal material, a large amount of organic binder decomposes into a large amount of organic gas when high-temperature exhaust gas reaches the exhaust gas purification apparatus including the holding seal material. Preferably, no such organic gas is generated.

In the holding seal material of the present invention, in a heat treatment test, a contact pressure of the holding seal material heated at a test temperature of 950°C is 65 to 99%, preferably 80 to 99%, more preferably 85 to 99% of a contact pressure of the holding seal material heated at a test temperature of 800°C.

The heat treatment test includes: a compressing step of disposing the holding seal material between an upper plate and a lower plate and compressing the holding seal material to a gap bulk density (GBD) of 0.3 g/cm³; a heating step of heating, after the compressing step, the compressed holding seal material to a predetermined test temperature at a temperature-increasing rate of 45°C/min and maintaining the holding seal material at the test temperature for six hours; a releasing step of cooling, after the heating step, the holding seal material to room temperature and releasing the holding seal material to a gap bulk density (GBD) of 0.27 g/cm³; a cycling step of repeating, after the releasing step, 1000 times the cycle of re-compression of the holding seal material to a gap bulk density (GBD) of 0.3 g/cm³ and re-release of the holding seal material to a gap bulk density (GBD) of 0.27 g/cm³ so as to calculate the contact pressure (kPa) of the holding sealing material by dividing the load at the last re-release in the cycling step by the area of the holding seal material.

As described above, the holding seal material of the present invention is used in an exhaust gas purification apparatus.

The exhaust gas purification apparatus including the holding seal material of the present invention is mounted in a vehicle, and the holding seal material of the present invention is exposed to high-temperature exhaust gas when the internal combustion engine is in operation.

The contact pressure of the holding seal material of the present invention is less likely to decrease even when the holding seal material is heat-treated for a long time under conditions of high temperature and high pressure as in the above heat treatment test.

The holding seal material of the present invention thus can sufficiently maintain the contact pressure even when exposed to high-temperature exhaust gas under high pressure.

The holding seal material of the present invention is used in an exhaust gas purification apparatus, and the exhaust gas purification apparatus is mounted in a vehicle. When the internal combustion engine is in operation to run the vehicle, exhaust resistance is transmitted to the holding seal material as high-temperature exhaust gas passes through the exhaust gas-treating body. Additionally, the vibrations of the vehicle are transmitted to the holding seal material of the present invention. The holding seal material of the present invention is thus continuously subjected to external exhaust resistance and vibrations.

During operation of the internal combustion engine, the metal case thermally expands due to high-temperature exhaust gas, thus widening the gap between the exhaust gas-treating body and the metal casing. When the internal combustion engine is stopped, the gap between the exhaust gas-treating body and the metal casing narrows to return to its original state. The holding seal material is thus subjected to external pressure variation (e.g., release and compression).

However, since the holding seal material of the present invention can sufficiently maintain the contact pressure even when exposed to high-temperature exhaust gas under high pressure, the holding seal material can sufficiently hold the exhaust gas-treating body in the exhaust gas purification apparatus including holding seal material of the present invention.

In the heat treatment test, if the contact pressure of the holding seal material heated at a test temperature of 950°C is less than 65% of the contact pressure of the holding seal material heated at a test temperature of 800°C, the contact pressure of the holding seal material is too low. When such a holding seal material is used in an exhaust gas purification apparatus, the exhaust gas-treating body easily falls off.

It is difficult to produce a holding seal material which, when heated at a test temperature of 950°C in the heat treatment test, has a contact pressure of more than 99% of the contact pressure of the holding seal material heated at a test temperature of 800°C in the heat treatment test.

In the holding seal material of the present invention, in the heat treatment test, the contact pressure of the holding seal material heated at a test temperature of 950°C is preferably 10 to 50 kPa, more preferably 15 to 50 kPa.

When the contact pressure of the holding seal material at a gap bulk density (GBD) of 0.27 g/cm³ is 10 to 50 kPa, the holding seal material can sufficiently hold the exhaust gas-treating body in the exhaust gas purification apparatus including the holding seal material.

Thus, in the heat treatment test, when the contact pressure of the holding seal material heated at a test temperature of 950°C is 10 to 50 kPa, the holding seal material of the present invention can sufficiently hold the exhaust gas-treating body in the exhaust gas purification apparatus including the holding seal material of the present invention.

The heat treatment test is described in detail below with reference to drawings.

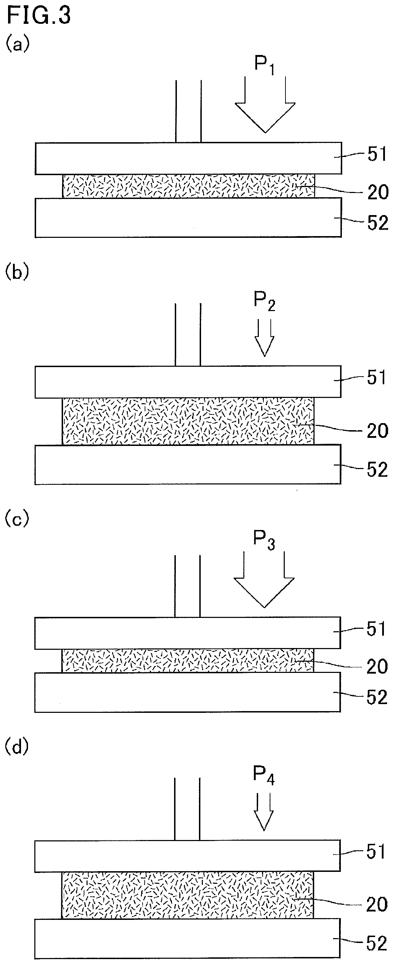

Figs. 3(a) to 3(d) are schematic views sequentially illustrating examples of respective steps of the heat treatment test.

In Figs. 3(a) to 3(d), arrows P₁ to P₄ each indicate the direction to which a load is applied. The size of each of the arrows P₁ to P₄ indicates the relative level of the load.

As illustrated in Fig. 3(a), in the heat treatment test, the holding seal material 20 is first disposed between an upper plate 51 and a lower plate 52, and a load (indicated by the arrow P₁) is applied to compress the holding seal material 20 to a gap bulk density (GBD) of 0.3 g/cm³ (compressing step).

After the compressing step, the holding seal material 20 is heated to 950°C at a temperature-increasing rate of 45°C/min, and maintained at 950°C for six hours (heating step) .

After the heating step, the holding seal material 20 is cooled to room temperature. As illustrated in Fig. 3(b), the load (indicated by arrow P₂) is reduced to release the holding seal material to a gap bulk density (GBD) of 0.27 g/cm³ (releasing step).

After the releasing step, as illustrated in Fig. 3(c), a load (indicated by arrow P₃) is applied to re-compress the holding seal material 20 to a gap bulk density (GBD) of 0.3 g/cm³.

Subsequently, as illustrated in Fig. 3(d), the load (indicated by arrow P₄) is reduced to re-release the holding seal material 20 to a gap bulk density (GBD) of 0.27 g/cm³.

The cycle of re-compression illustrated in Fig. 3(c) and re-release illustrated in Fig. 3(d) is repeated 1000 times (cycling step).

The load indicated by arrow P₄ in Fig. 3(d) is measured at the last re-release in the cycling step. This load is divided by the area of the holding seal material 20 to determine the contact pressure (kPa).

Next, the method for producing a holding seal material of the present invention is described.

The method is a method for producing a holding seal material including alumina fibers, the method including: a spinning mixture preparing step of mixing an aqueous solution of basic aluminum chloride and silica sol to achieve a proportion of basic aluminum chloride of 82.8 to 97.7 wt% and a proportion of silica of 17.2 to 2.3 wt% to prepare a spinning mixture; an alumina fiber precursor producing step of spinning the spinning mixture into alumina fiber precursors by a blowing method at 80°C to 140°C; an aggregate producing step of collecting the alumina fiber precursors to produce an alumina fiber precursor aggregate having a moisture content of 5 to 10%; a conveying step of moisturizing the alumina fiber precursor aggregate to a moisture content of 10 to 18% and conveying the alumina fiber precursor aggregate; a sheet producing step of compressing the alumina fiber precursor aggregate into a sheet having a moisture content of 10 to 18%; a needle punching step of needle punching the sheet under the condition of 2 to 50 marks/cm²; and a firing step of firing the sheet having a moisture content of 10 to 18% at 1200°C to 1300°C.

### (Spinning mixture preparing step)

An aqueous solution of basic aluminum chloride and silica sol are mixed to achieve a proportion of basic aluminum chloride of 82.8 to 97.7 wt% and a proportion of silica of 17.2 to 2.3 wt% to prepare a spinning mixture.

As long as the above weight proportions of basic aluminum chloride and silica can be achieved, these compounds may be mixed by any method.

The above weight proportions of basic aluminum chloride and silica allow the alumina fibers constituting the resulting holding seal material to contain 85 to 98 wt% of an alumina component and 15 to 2 wt% of a silica component.

### (Alumina fiber precursor producing step)

In the alumina fiber precursor producing step, the spinning of the spinning mixture (fiberization of the spinning solution) into the alumina fiber precursors is performed by a blowing method involving feeding the spinning solution to a high-velocity spinning air stream. The temperature of the spinning atmosphere at that time is 80°C to 140°C, preferably 85°C to 140°C, more preferably 100°C to 120°C.

A temperature of the spinning atmosphere of lower than 80°C results in insufficient evaporation of the moisture contained in the alumina fiber precursors, and moisture that vaporizes in the firing step tends to cause defects inside the alumina fibers.

A temperature of the spinning atmosphere of higher than 140°C results in insufficient stretching of the alumina fiber precursors.

### (Aggregate producing step)

Subsequently, in the aggregate producing step, the alumina fiber precursors are collected to produce an alumina fiber precursor aggregate having moisture content of 5 to 10%.

Specifically, in this step, a certain amount of the fiberized alumina fiber precursors are collected on a fiber collecting apparatus to produce an alumina fiber precursor aggregate. The fiber collecting apparatus has a structure that suctions the spinning air stream from the bottom, so that the air stream controlled at 80°C to 140°C passes through the inside of the aggregate of the collected alumina fiber precursors to promote drying of the alumina fiber precursors. The moisture content of the alumina fiber precursor aggregate at this time is controlled to 5 to 10%. As a result, the alumina fiber precursors are dried throughout.

If the moisture content is less than 5%, the alumina fiber precursor aggregate is dried too much, and the alumina fiber precursors may crack in conveying the alumina fiber precursor aggregate.

If the moisture content is more than 10%, the alumina fiber precursors are not dried throughout.

### (Conveying step)

Subsequently, in the conveying step, the alumina fiber precursor aggregate is moisturized to a moisture content of 10 to 18% and conveyed.

In the aggregate producing step, the alumina fiber precursors are dried throughout; however, in conveying the alumina fiber precursor aggregate, the presence of moisture attached to the surface of the alumina fiber precursors can increase the lubricity between the alumina fiber precursors, thereby avoiding damage due to vibrations during conveying. In this step, the alumina fiber precursor aggregate is thus moisturized to a moisture content of 10 to 18% for conveying. The resulting alumina fiber precursors are wet on the surface but dry on the inside.

If the moisture content is less than 10%, the alumina fiber precursor aggregate is dried too much, and the alumina fiber precursors may crack in the subsequent sheet preparing step.

If the moisture content is more than 18%, defects easily occur inside the alumina fibers in the subsequent firing step.

In the conveying step, the alumina fiber precursor aggregate may be moisturized by any method as long as the moisture content reaches 10 to 18%. For example, the aggregate may be moisturized by applying a moisturizing air stream, or by spraying.

The moisturization may be performed at any time. It may be performed before or during the conveyance of the alumina fiber precursor aggregate.

An oil agent may be added to the alumina fiber precursor aggregate in this step so as to reduce friction resistance in the subsequent needle punching step. Examples of the oil agent include kerosene, fatty acid ester, and silicone.

### (Sheet producing step)

Subsequently, in the sheet producing step, the alumina fiber precursor aggregate is compressed into a sheet having a moisture content of 10 to 18%.

The moisture content of the sheet of 10 to 18% enables production of alumina fibers having high heat resistance and high strength in the subsequent firing step. The sheet preferably has a moisture content of 10 to 15%.

If the moisture content is less than 10%, the sheet is dried too much, and the alumina fiber precursors may crack in an early stage of firing in the subsequent firing step.

If the moisture content is more than 18%, defects easily occur inside the alumina fibers in the subsequent firing step.

The sheet may be produced by any method, such as a cross-layer method.

The cross-layer method uses a layering apparatus composed of a conveyer belt for conveyance in a prescribed direction and an arm capable of reciprocating in the direction perpendicular to the conveying direction of the conveyer belt for supplying the alumina fiber precursors compressed in a thin sheet (precursor web).

In the case of producing the sheet using the layering apparatus by the cross-layer method, first, the conveyer belt is operated for conveyance. In this state, while the arm is reciprocated in the direction perpendicular to the conveying direction of the conveyer belt, the precursor web is supplied continuously onto the conveyer belt. The precursor web is continuously conveyed in a prescribed direction by the conveyer belt while folded and layered on the conveyer belt multiple times. When the length of the layered precursor web becomes suitable for handling, the layered precursor web is cut into a sheet with a predetermined size.

In the sheet produced by the cross-layer method, most of the alumina fiber precursors are arranged along the direction substantially parallel to a first main surface and a second main surface and moderately entangled with each other.

### (Needle punching step)

Subsequently, in the needle punching step, the sheet is needle-punched under the condition of 2 to 50 marks/cm².

Needle punching entangles the alumina fibers with each other, improving the strength of the resulting holding seal material. Needle punching thus suppresses the breakage of the holding seal material and improves the holding force when the holding seal material is assembled with the exhaust gas treating apparatus.

Additionally, air streams tend to flow through the marks formed by needle punching, so that the moisture in the sheet is less likely to be unevenly distributed.

Needle punching is preferably performed while conveying the sheet.

Needle punching in this manner can curve the marks formed by needle punching.

Curving the marks formed by needle punching can make them long. As mentioned above, an air stream flows through the marks formed by needle punching. With long marks formed by needle punching, moisture in the sheet is still less likely to be unevenly distributed.

Needle punching is preferably performed such that the resulting marks formed by needle punching are oblique relative to the thickness direction of the sheet.

### (Firing step)

In the firing step, the sheet having a moisture content of 10 to 18% is fired at 1200°C to 1300°C, preferably at 1250°C to 1300°C.

This step converts the alumina fiber precursors into alumina fibers. The holding seal material can be produced by cutting the sheet into a predetermined size.

A firing temperature of lower than 1200°C results in insufficient crystallization, which tends to weaken fiber strength.

A firing temperature of higher than 1300°C causes excessive grain growth in the fiber crystals, resulting in too hard, brittle fibers.

Next, the use of the holding seal material of the present invention is described.

As described above, the holding seal material of the present invention is used in an exhaust gas purification apparatus.

The exhaust gas purification apparatus includes an exhaust gas-treating body for treating exhaust gas, a casing housing the exhaust gas-treating body, and the holding seal material of the present invention interposed between the exhaust gas-treating body and the casing. Such an exhaust gas purification apparatus may be produced by a method including: a wound body producing step of winding the holding seal material of the present invention around an exhaust gas-treating body to prepare a wound body; and a housing step of housing the wound body into a casing.

In the wound body preparing step, first, an exhaust gas-treating body is prepared, and the holding seal material is wound around the exhaust gas-treating body to produce a wound body.

The exhaust gas-treating body may be prepared by any method, and may be produced by a conventional method. For example, a molded body is produced by extrusion molding and then fired.

In the housing step, the wound body is housed in a casing.

The casing is preferably made of a metal such as stainless steel.

The casing may have a cylindrical shape whose inner diameter of each end is smaller than the inner diameter of the middle portion, or may have a cylindrical shape whose inner diameter is constant.

The inner diameter of the casing (the inner diameter of the portion to house the wound body) is preferably slightly smaller than the diameter of the wound body. When the inner diameter of the casing is slightly smaller than the diameter of the wound body, the wound body is firmly held by the casing, so that the exhaust gas-treating body is less likely to fall off during the use of the resulting exhaust gas purification apparatus.

In the housing step, the wound body may be press-fit into the casing by a press-fitting method to produce an exhaust gas purification apparatus. Alternatively, the exhaust gas purification apparatus may be produced by a sizing method.

When the exhaust gas purification apparatus is produced by a sizing method, the exhaust gas purification apparatus can be produced by disposing the wound body in a cylindrical casing whose inner diameter is greater than the outer diameter of the wound body, and uniformly pressurizing the periphery of the casing to make the casing smaller, thus closing the gap between the inner wall of the casing and the wound body to fix the wound body.

In the following, a method for producing an exhaust gas purification apparatus using the holding seal material of the present invention is described with reference to drawings.

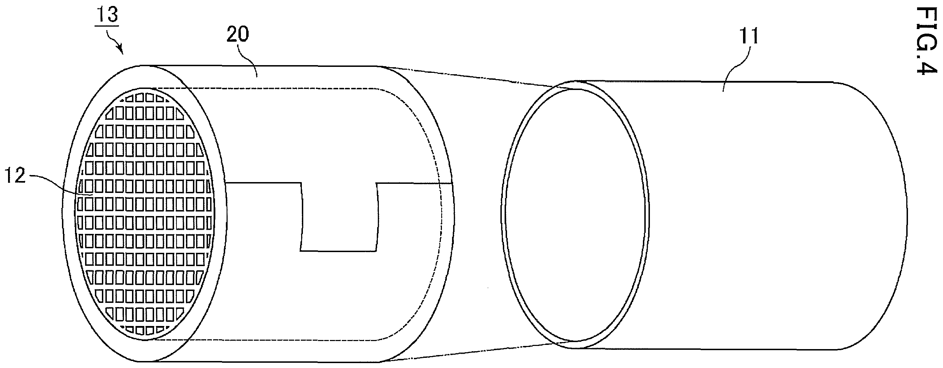

Fig. 4 is a schematic view illustrating one example of the method for producing an exhaust gas purification apparatus using the holding seal material of the present invention.

First, as illustrated in Fig. 4, the exhaust gas-treating body 12 is prepared, and the holding seal material 20 is wound around the exhaust gas-treating body 12 to produce a wound body 13. Then, the wound body 13 is housed in the casing 11.

Through these steps, an exhaust gas purification apparatus including the holding seal material of the present invention can be produced.

The effects of the holding seal material of the present invention are described below.
(1) In the holding seal material of the present invention, the alumina fibers constituting the holding seal material of the present invention contain 85 to 98 wt% of an alumina component and 15 to 2 wt% of a silica component.
   The alumina fibers containing such a large amount of an alumina component have improved heat resistance. The alumina fibers are thus less likely to degrade even when heated at high temperature, so that the contact pressure of the holding seal material is less likely to decrease even when the holding seal material is heated at high temperature.
(2) The holding seal material of the present invention has multiple marks formed by needle punching.
   Entangling the alumina fibers with each other by needle punching can improve the strength of the holding seal material of the present invention. It can also prevent development of erosion due to exhaust gas.
(3) In the holding seal material of the present invention, in the above heat treatment test, the contact pressure of the holding seal material heated at a test temperature of 950°C is 65 to 99% of the contact pressure of the holding seal material heated at a test temperature of 800°C.

In other words, the contact pressure of the holding seal material of the present invention is less likely to decrease even when the holding seal material is heat-treated under conditions of high temperature and high pressure as in the above heat treatment test.

The holding seal material of the present invention thus can sufficiently maintain the contact pressure even when exposed to high-temperature exhaust gas under high pressure.

As a result, the holding seal material of the present invention can sufficiently hold the exhaust gas-treating body in the exhaust gas purification apparatus including the holding seal material of the present invention.

### EXAMPLES

Examples that more specifically disclose the present invention are described below, but the present invention is not limited to these examples.

### (Example 1)

### (1) Spinning mixture preparing step

An aqueous solution (400 g) of basic aluminum chloride prepared to have an Al content of 12.5 wt% and an Al/Cl ratio (atomic ratio) of 2.0 and 20 wt% silica sol (25 g) were mixed to prepare a spinning mixture.

An appropriate amount of an organic polymer (polyvinyl alcohol) was further added to the mixture to prepare a mixed solution.

### (2) Alumina fiber precursor producing step

The obtained mixed solution was concentrated into a spinning mixture. This spinning mixture was spun by a blowing method (spinning atmosphere temperature: 120°C) into alumina fiber precursors.

The obtained alumina fiber precursors had an average fiber diameter of 5.5 µm.

### (3) Aggregate producing step

Next, the alumina fiber precursors were collected on a fiber collecting apparatus to produce an alumina fiber precursor aggregate.

The alumina fiber precursors were collected by suctioning of a spinning air stream at 100°C from the bottom of the fiber collecting apparatus. The obtained alumina fiber precursor aggregate had a moisture content of 5%.

### (4) Conveying step

The obtained alumina fiber precursor aggregate was conveyed while a moisturizing air stream was applied to the alumina fiber precursor aggregate to achieve a moisture content of 10%.

### (5) Sheet producing step

The alumina fiber precursors thus conveyed were compressed by a cross-layer method into a sheet having a moisture content of 10%.

### (6) Needle punching step

The sheet was needle punched to achieve an areal density of 23 marks/cm².

### (7) Firing step

The sheet was then fired at a maximum temperature of 1300°C to convert the alumina fiber precursors into alumina fibers, thereby producing an alumina fiber sheet. Then, 1 wt% of an organic binder relative to the weight of the obtained sheet was added, followed by cutting to a size of 330 mm (length) × 90 mm (width). Thus, a holding seal material according to Example 1 was produced.

The holding seal material had a thickness of 9.3 mm, a weight per unit area of 1400 g/m², and a density (bulk density) of 0.15 g/cm³.

The alumina fibers had the following component ratio: Al₂O₃:SiO₂ = 95:5 (weight ratio). The chemical composition of the alumina fibers was analyzed with a fluorescence X-ray analyzer (Rigaku Corporation, product name: ZSX-PrimusII).

### (Example 2)

A holding seal material according to Example 2 was produced as in Example 1 except that after the needle punching step (6), 1 wt% of inorganic particles relative to the weight of the sheet was added to the sheet.

### (Example 3)

A holding seal material according to Example 3 was produced as in Example 1 except that in the spinning mixture preparing step (1), the spinning mixture was prepared by mixing 380 g of an aqueous solution of basic aluminum chloride and 50 g of silica sol.

The alumina fibers of the holding seal material of Example 3 had the following alumina:silica ratio: Al₂O₃:SiO₂ = 90:10 (weight ratio).

### (Comparative Example 1)

A holding seal material according to Comparative Example 1 was produced as in Example 1 except that in the spinning mixture preparing step (1), the spinning mixture was prepared by mixing 350 g of an aqueous solution of basic aluminum chloride and 90 g of silica sol.

The alumina fibers of the holding seal material of Example 3 had the following alumina:silica ratio: Al₂O₃:SiO₂ = 82:18 (weight ratio).

### (Comparative Example 2)

A holding seal material according to Comparative Example 2 was produced as in Example 1 except that in the spinning mixture preparing step (1), the spinning mixture was prepared by mixing 305 g of an aqueous solution of basic aluminum chloride and 140 g of silica sol.

The alumina fibers of the holding seal material of Comparative Example 2 had the following alumina:silica ratio: Al₂O₃:SiO₂ = 72:28 (weight ratio) .

### <Heat treatment test (heating temperature: 950°C)>

### (1) Preparation of heat treatment test sample

Each of the holding seal materials according to Examples 1 to 3 and Comparative Examples 1 and 2 was punched into a size of 50 × 50 mm (length × width) to produce a heat treatment test sample. The weight of the sample was measured.

### (2) Compressing step

A hot contact pressure measuring device equipped with a heater was provided. Each sample was disposed between the upper plate and the lower plate of the hot contact pressure measuring device and compressed to a gap bulk density (GBD) of 0.3 g/cm³.

### (3) Heating step

After the compressing step (2), each sample was heated to 950°C at a temperature-increasing rate of 45°C/min, and maintained at 950°C for six hours.

### (4) Releasing step

After the heating step (3), each sample was released to a gap bulk density (GBD) of 0.27 g/cm³.

### (5) Cycling step

After the releasing step (4), each sample was recompressed to a gap bulk density (GBD) of 0.3 g/cm³, and then re-released to a gap bulk density (GBD) of 0.27 g/cm³. The cycle of re-compression and re-release was repeated 1000 times.

### (6) Contact pressure measurement after heat treatment test

The load at the last re-release in the cycling step (5) was measured. The obtained load was divided by the area of the sample. In this manner, the contact pressure (kPa) of each sample after the heat treatment test was determined. Table 1 shows the results.

### <Heat treatment test (heating temperature: 800°C)>

The contact pressure of each sample after the heat treatment test was measured as in <Heat treatment test (heating temperature: 950°C)> except that the heating step (3') below was performed instead of the heating step (3). Table 1 shows the results.

### (3') Heating step

After the compressing step (2), each sample was heated to 800°C at a temperature-increasing rate of 45°C/min, and maintained at 800°C for six hours.

For each sample, the ratio (%) of the contact pressure after the heat treatment test (heating temperature: 950°C) to the contact pressure after the heat treatment test (heating temperature: 800°C) was determined. Table 1 shows the results.

**[Table 1]**

| | Alumina:silica ratio in alumina fibers (Al₂O₃:SiO₂) | Amount of inorganic particles (wt%) | Contact pressure after heat treatment test kPa | | Ratio (%) of contact pressure after heat treatment test (950°C) to contact pressure after heat treatment test (800°C) |
|---|---|---|---|---|---|
| | | | 800°C | 950°C | |
| Example 1 | 95:5 | - | 36 | 34 | 94 |
| Example 2 | 95:5 | 1 | 42 | 38 | 90 |
| Example 3 | 90:10 | - | 38 | 34 | 88 |
| Comparative Example 1 | 82:18 | - | 25 | 8 | 32 |
| Comparative Example 2 | 72:28 | - | 23 | 5 | 22 |

Table 1 shows that the contact pressure after heat treatment test (800°C) and the contact pressure after the heat treatment test (950°C) of the samples according to Examples 1 to 3 were higher than those of the samples according to Comparative Examples 1 and 2. The sample according to Example 2, in which inorganic particles were added to the holding seal material, had a particularly excellent contact pressure after the heat treatment test (950°C).

In all the samples of Examples 1 to 3, the ratio (%) of the contact pressure after the heat treatment test (heating temperature: 950°C) to the contact pressure after the heat treatment test (heating temperature: 800°C) was 65% or higher.

The holding seal materials according to Examples 1 to 3 were thus characterized in that their contact pressure was less likely to decrease and that they were less susceptible to erosion even when they were exposed to high-temperature exhaust gas at 950°C or higher under high pressure.

The reasons why the holding seal materials according to Examples 1 to 3 had these characteristics are presumably that the alumina fibers constituting the holding seal materials had an alumina ratio of 85% or higher, that the spinning atmosphere temperature was controlled at 80°C to 140°C in the alumina fiber precursor producing step in the method for producing the holding seal material, and that the moisture contents of the alumina fiber precursor aggregate and the sheet were controlled to suitable levels in the process from the aggregate producing step (3) to the firing step (7) in the method for producing the holding seal material.

### REFERENCE SIGNS LIST

- 10: Exhaust gas purification apparatus
- 11: Casing
- 12: Exhaust gas-treating body
- 13: Wound body
- 15: Through-hole
- 16: Partition wall
- 17: Catalyst
- 20: Holding seal material
- 21: Projecting portion
- 22: Recessed portion
- 25: Mark formed by needle punching
- 51: Upper plate
- 52: Lower plate

## Claims

1. A method for producing a holding seal material including alumina fibers, the method comprising:
a spinning mixture preparing step of mixing an aqueous solution of basic aluminum chloride and silica sol to achieve a proportion of basic aluminum chloride of 82.8 to 97.7 wt% and a proportion of silica of 17.2 to 2.3 wt% to prepare a spinning mixture;
an alumina fiber precursor producing step of spinning the spinning mixture into alumina fiber precursors by a blowing method at 80°C to 140°C;
an aggregate producing step of collecting the alumina fiber precursors to produce an alumina fiber precursor aggregate having a moisture content of 5 to 10%;
a conveying step of moisturizing the alumina fiber precursor aggregate to a moisture content of 10 to 18% and conveying the alumina fiber precursor aggregate;
a sheet producing step of compressing the alumina fiber precursor aggregate into a sheet having a moisture content of 10 to 18%;
a needle punching step of needle punching the sheet under the condition of 2 to 50 marks/cm²; and
a firing step of firing the sheet having a moisture content of 10 to 18% at 1200°C to 1300°C.

2. A holding seal material produced by the method of claim 1, comprising:
alumina fibers,
wherein the alumina fibers contain 85 to 98 wt% of an alumina component and 15 to 2 wt% of a silica component,
the holding seal material has multiple marks formed by needle punching, and
in a heat treatment test, a contact pressure of the holding seal material heated at a test temperature of 950°C is 65 to 99% of a contact pressure of the holding seal material heated at a test temperature of 800°C,
wherein the heat treatment test includes:
a compressing step of disposing the holding seal material between an upper plate and a lower plate and compressing the holding seal material to a gap bulk density (GBD) of 0.3 g/cm³;
a heating step of heating, after the compressing step, the compressed holding seal material to a predetermined test temperature at a temperature-increasing rate of 45°C/min and maintaining the holding seal material at the test temperature for six hours;
a releasing step of cooling, after the heating step, the holding seal material to room temperature and releasing the holding seal material to a gap bulk density (GBD) of 0.27 g/cm³; and
a cycling step of repeating, after the releasing step, 1000 times the cycle of re-compression of the holding seal material to a gap bulk density (GBD) of 0.3 g/cm³ and re-release of the holding seal material to a gap bulk density (GBD) of 0.27 g/cm³ so as to calculate the contact pressure (kPa) of the holding seal material by dividing the load at the last re-release in the cycling step by the area of the holding seal material.

3. The holding seal material according to claim 2,
wherein in the heat treatment test, the contact pressure of the holding seal material heated at a test temperature of 950°C is 80 to 99% of the contact pressure of the holding seal material heated at a test temperature of 800°C.

4. The holding seal material according to claim 2 or 3,
wherein in the heat treatment test, the contact pressure of the holding seal material heated at a test temperature of 950°C is 10 to 50 kPa.

5. The holding seal material according to any one of claims 2 to 4,
wherein the alumina fibers have an average fiber diameter of 5 to 8 µm.

6. The holding seal material according to any one of claims 2 to 5,
wherein inorganic particles are attached to the surface of the alumina fibers.

7. The holding seal material according to claim 6,
wherein the inorganic particles are at least one selected from the group consisting of titania particles, silica particles, alumina particles, and magnesia particles.

8. The holding seal material according to any one of claims 2 to 7,
wherein the alumina fibers contain α-alumina in a proportion of 0.3 to 15 wt% relative to the weight of the alumina fibers.

9. The holding seal material according to any one of claims 2 to 8, further comprising at least one organic binder selected from the group consisting of a water-soluble or water-dispersed organic polymer, a thermoplastic resin, and a thermosetting resin.

10. The holding seal material according to claim 9,
wherein the water-soluble or water-dispersed organic polymer is at least one selected from the group consisting of acrylic resin, acrylate latex, rubber latex, carboxymethylcellulose, and polyvinyl alcohol.

11. The holding seal material according to claim 9,
wherein the thermoplastic resin is styrene resin.

12. The holding seal material according to claim 9,
wherein the thermosetting resin is epoxy resin.

13. The holding seal material according to any one of claims 9 to 12,
wherein the holding seal material has an organic binder content of 0.1 to 9.0 wt% relative to the weight of the holding seal material.

14. The holding seal material according to any one of claims 2 to 13,
wherein at least one of the marks formed by needle punching is curved and penetrates the holding seal material.

## Patentansprüche

1. Verfahren zur Herstellung eines Aluminiumoxid-Fasern enthaltenden Haltedichtungsmaterials,
wobei das Verfahren umfasst:
einen Spinnmischungs-Vorbereitungsschritt, bei dem zur Vorbereitung einer Spinnmischung eine wässrige Lösung von basischem Aluminiumchlorid und Kieselsol gemischt werden, um einen Anteil an basischem Aluminiumchlorid von 82.8 bis 97.7 Gew.-% und einen Anteil an Siliciumdioxid von 17.2 bis 2.3 Gew.-% zu erreichen;
einen Aluminiumoxid-Faservorläufer-Herstellungsschritt, bei dem die Spinnmischung durch ein Blasverfahren bei 80°C bis 140°C zu Aluminiumoxid-Faservorläufern gesponnen wird;
einen Aggregats-Herstellungsschritt, bei dem die Aluminiumoxid-Faservorläufer gesammelt werden, um ein Aluminiumoxid-Faservorläufer-Aggregat mit einem Feuchtigkeitsgehalt von 5 bis 10 % herzustellen;
einen Förderschritt, bei dem das Aluminiumoxid-Faservorläufer-Aggregat auf einen Feuchtigkeitsgehalt von 10 bis 18 % angefeuchtet wird und das Aluminiumoxid-Faservorläufer-Aggregat gefördert wird;
einen Blatt-Herstellungsschritt, bei dem das Aluminiumoxid-Faservorläufer-Aggregat zu einem Blatt mit einem Feuchtigkeitsgehalt von 10 bis 18 % komprimiert wird;
einen Nadelstanzen-Schritt, bei dem das Blatt unter der Bedingung von 2 bis 50 Markierungen/cm² vernadelt wird; und
einen Brennschritt, bei dem das Blatt mit einem Feuchtigkeitsgehalt von 10 bis 18 % bei 1200 °C bis 1300 °C gebrannt wird.

2. Haltedichtungsmaterial, hergestellt nach dem Verfahren nach Anspruch 1, umfassend:
Aluminiumoxid-Fasern,
wobei die Aluminiumoxid-Fasern 85 bis 98 Gew.-% einer Aluminiumoxid-Komponente und 15 bis 2 Gew.-% einer Siliciumdioxid-Komponente enthalten,
das Haltedichtungsmaterial mehrere durch Nadelstanzen gebildete Markierungen aufweist, und
in einem Wärmebehandlungstest ein Kontaktdruck des bei einer Testtemperatur von 950 °C erhitzten Haltedichtungsmaterials 65 bis 99 % eines Kontaktdrucks des bei einer Testtemperatur von 800°C erhitzten Haltedichtungsmaterials beträgt,
wobei der Wärmebehandlungstest enthält:
einen Komprimierungsschritt, bei dem das Haltedichtungsmaterial zwischen einer oberen Platte und einer unteren Platte angeordnet wird und das Haltedichtungsmaterial zu einer Spalt-Schüttdichte ("gap bulk density", GBD) von 0.3 g/cm³ komprimiert wird;
einen Erwärmungsschritt, bei dem, nach dem Komprimierungsschritt, das komprimierte Haltedichtungsmaterial zu einer vorbestimmten Testtemperatur bei einer Temperaturerhöhungsrate von 45 °C/min erwärmt wird und das Haltedichtungsmaterial bei der Testtemperatur für sechs Stunden beibehalten wird;
einen Freigabeschritt, bei dem, nach dem Erwärmungsschritt, das Haltedichtungsmaterial auf Raumtemperatur gekühlt wird und das Haltedichtungsmaterial zu einer Spalt-Schüttdichte ("gap bulk density", GBD) von 0.27 g/cm³ freigegeben wird; und
einen zyklischen Schritt, bei dem, nach dem Freigabeschritt, 1000-mal der Zyklus der erneuten Komprimierung des Haltedichtungsmaterials zu einer Spalt-Schüttdichte (GBD) von 0.3 g/cm³ und der erneuten Freigabe des Haltedichtungsmaterials zu einer Spalt-Schüttdichte (GBD) von 0.27 g/cm³ wiederholt wird, um den Kontaktdruck (kPa) des Haltedichtungsmaterials zu berechnen, indem die Belastung bei der letzten erneuten Freigabe im zyklischen Schritt durch die Fläche des Haltedichtungsmaterials geteilt wird.

3. Haltedichtungsmaterial nach Anspruch 2,
wobei bei dem Wärmebehandlungstest der Kontaktdruck des bei einer Testtemperatur von 950°C erhitzten Haltedichtungsmaterials 80 bis 99% des Kontaktdrucks des bei einer Testtemperatur von 800°C erhitzten Haltedichtungsmaterials beträgt.

4. Haltedichtungsmaterial nach Anspruch 2 oder 3,
wobei bei dem Wärmebehandlungstest der Kontaktdruck des bei einer Testtemperatur von 950°C erhitzten Haltedichtungsmaterials 10 bis 50 kPa beträgt.

5. Haltedichtungsmaterial nach irgendeinem der Ansprüche 2 bis 4,
wobei die Aluminiumoxid-Fasern einen durchschnittlichen Faserdurchmesser von 5 bis 8 µm aufweisen.

6. Haltedichtungsmaterial nach irgendeinem der Ansprüche 2 bis 5,
wobei anorganische Partikel an der Oberfläche der Aluminiumoxidfasern angebracht sind.

7. Haltedichtungsmaterial nach Anspruch 6,
wobei die anorganischen Partikel mindestens eines sind, ausgewählt aus der Gruppe bestehend aus Titandioxid-Partikeln, Siliciumdioxid-Partikeln, Aluminiumoxid-Partikeln und Magnesiumoxid-Partikeln.

8. Haltedichtungsmaterial nach irgendeinem der Ansprüche 2 bis 7,
wobei die Aluminiumoxid-Fasern α-Aluminiumdioxid in einem Anteil von 0.3 bis 15 Gew.-% bezogen auf das Gewicht der Aluminiumoxid-Fasern enthalten.

9. Haltedichtungsmaterial nach irgendeinem der Ansprüche 2 bis 8, ferner enthaltend mindestens ein organisches Bindemittel, ausgewählt aus der Gruppe bestehend aus einem wasserlöslichen oder wasserdispergierten organischen Polymer, einem thermoplastischen Harz und einem duroplastischen Harz.

10. Haltedichtungsmaterial nach Anspruch 9,
wobei das wasserlösliche oder wasserdispergierte organische Polymer mindestens eines ist, ausgewählt aus der Gruppe bestehend aus Acrylharz, Acrylatlatex, Gummilatex, Carboxymethylcellulose und Polyvinylalkohol.

11. Haltedichtungsmaterial nach Anspruch 9,
wobei das thermoplastische Harz Styrolharz ist.

12. Haltedichtungsmaterial nach Anspruch 9,
wobei das duroplastische Harz Epoxidharz ist.

13. Haltedichtungsmaterial nach irgendeinem der Ansprüche 9 bis 12,
wobei das Haltedichtungsmaterial einen Gehalt an organischem Bindemittel von 0.1 bis 9.0 Gew.-% bezogen auf das Gewicht des Haltedichtungsmaterials aufweist.

14. Haltedichtungsmaterial nach irgendeinem der Ansprüche 2 bis 13,
wobei mindestens eine der durch Nadelstanzen gebildeten Markierungen gekrümmt ist und das Haltedichtungsmaterial durchdringt.

## Revendications

1. Procédé de production d'un matériau d'étanchéité de retenue incluant des fibres d'alumine,
le procédé comprenant :
une étape de préparation de mélange de filage mélangeant une solution aqueuse de chlorure d'aluminium basique et de sol de silice pour réaliser une proportion de chlorure d'aluminium basique de 82,8 à 97,7 % en masse et une proportion de silice de 17,2 à 2,3 % en masse pour préparer un mélange de filage ;
une étape de production de précurseur de fibre d'alumine filant le mélange de filage en précurseurs de fibre d'alumine par un procédé de soufflage à de 80°C à 140°C ;
une étape de production d'agrégat collectant les précurseurs de fibre d'alumine pour produire un agrégat de précurseur de fibre d'alumine ayant une teneur en humidité de 5 à 10 % ;
une étape d'acheminement hydratant l'agrégat de précurseur de fibre d'alumine jusqu'à une teneur en humidité de 10 à 18 % et acheminant l'agrégat de précurseur de fibre d'alumine ;
une étape de production de feuille comprimant l'agrégat de précurseur de fibre d'alumine en une feuille ayant une teneur en humidité de 10 à 18 % ;
une étape d'aiguilletage aiguilletant la feuille dans la condition de 2 à 50 marques/cm² ; et
une étape de cuisson cuisant la feuille ayant une teneur en humidité de 10 à 18 % à de 1 200°C à 1 300°C.

2. Matériau d'étanchéité de retenue produit par le procédé selon la revendication 1, comprenant :
des fibres d'alumine,
dans lequel les fibres d'alumine contiennent de 85 à 98 % en masse d'un constituant d'alumine et de 15 à 2 % en masse d'un constituant de silice,
le matériau d'étanchéité de retenue présente de multiples marquées formées par aiguilletage, et
dans un test de traitement thermique, une pression de contact du matériau d'étanchéité de retenue chauffé à une température de test de 950°C est de 65 à 99 % d'une pression de contact du matériau d'étanchéité de retenue chauffé à une température de test de 800°C,
dans lequel le test de traitement thermique inclut :
une étape de compression disposant le matériau d'étanchéité de retenue entre une plaque supérieure et une plaque inférieure et comprimant le matériau d'étanchéité de retenue jusqu'à une masse volumique apparente d'espace (GBD) de 0,3 g/cm³ ;
une étape de chauffage chauffant, après l'étape de compression, le matériau d'étanchéité de retenue comprimé à une température de test prédéterminée à une vitesse d'augmentation de température de 45°C/min et maintenant le matériau d'étanchéité de retenue à la température de test pendant six heures ;
une étape de relâchement, refroidissant, après l'étape de chauffage, le matériau d'étanchéité de retenue à température ambiante et relâchant le matériau d'étanchéité de retenue à une masse volumique apparente d'espace (GBD) de 0,27 g/cm³ ; et
une étape de cycle répétant, après l'étape de relâchement, 1 000 fois le cycle de re-compression du matériau d'étanchéité de retenue à une masse volumique apparente d'espace (GBD) de 0,3 g/cm³ et de re-relâchement du matériau d'étanchéité de retenue à une masse volumique apparente d'espace (GBD) de 0,27 g/cm³ afin de calculer la pression de contact (kPa) du matériau d'étanchéité de retenue en divisant la charge au dernier re-relâchement dans l'étape de cycle par la surface du matériau d'étanchéité de retenue.

3. Matériau d'étanchéité de retenue selon la revendication 2,
dans lequel dans le test de traitement thermique, la pression de contact du matériau d'étanchéité de retenue chauffé à une température de test de 950°C est de 80 à 99 % de la pression de contact du matériau d'étanchéité de retenue chauffé à une température du test de 800°C.

4. Matériau d'étanchéité de retenue selon la revendication 2 ou 3,
dans lequel dans le test de traitement thermique, la pression de contact du matériau d'étanchéité de retenue chauffé à une température de test de 950°C est de 10 à 50 kPa.

5. Matériau d'étanchéité de retenue selon l'une quelconque des revendications 2 à 4,
dans lequel les fibres d'alumine présentent un diamètre moyen de fibre de 5 à 8 µm.

6. Matériau d'étanchéité de retenue selon l'une quelconque des revendications 2 à 5,
dans lequel les particules inorganiques sont fixées à la surface des fibres d'alumine.

7. Matériau d'étanchéité de retenue selon la revendication 6,
dans lequel les particules inorganiques sont au moins les unes choisies dans le groupe consistant en particules d'oxyde de titane, particules de silice, particules d'alumine, et particules de magnésie.

8. Matériau d'étanchéité de retenue selon l'une quelconque des revendications 2 à 7,
dans lequel les fibres d'alumine contiennent de l'alumine α dans une proportion de 0,3 à 15 % en masse par rapport à la masse des fibres d'alumine.

9. Matériau d'étanchéité de retenue selon l'une quelconque des revendications 2 à 8, comprenant de plus au moins un liant organique choisi dans le groupe consistant en un polymère organique soluble dans l'eau ou dispersé dans l'eau, une résine thermoplastique, et une résine thermodurcissable.

10. Matériau d'étanchéité de retenue selon la revendication 9,
dans lequel le polymère organique soluble dans l'eau ou dispersé dans l'eau est au moins un choisi dans le groupe consistant en résine acrylique, latex d'acrylate, latex de caoutchouc, carboxyméthylcellulose, et poly(alcool vinylique).

11. Matériau d'étanchéité de retenue selon la revendication 9,
dans lequel la résine thermoplastique est une résine de styrène.

12. Matériau d'étanchéité de retenue selon la revendication 9,
dans lequel la résine thermodurcissable est une résine époxy.

13. Matériau d'étanchéité de retenue selon l'une quelconque des revendications 9 à 12,
dans lequel le matériau d'étanchéité de retenue présente une teneur en liant organique de 0,1 à 9,0 % en masse par rapport à la masse du matériau d'étanchéité de retenue.

14. Matériau d'étanchéité de retenue selon l'une quelconque des revendications 2 à 13,
dans lequel au moins une des marques formées par aiguilletage est courbée et pénètre dans le matériau d'étanchéité de retenue.
